# Europäisches Patentamt
# European Patent Office
# Office européen des brevets

(19)

(11) Numéro de publication: **0 131 521 B1**

(12)
# FASCICULE DE BREVET EUROPEEN

(45) Date de publication du fascicule du brevet:
**20.04.88**

(51) Int. Cl.⁴: **H 04 B 14/04**

(21) Numéro de dépôt: **84401445.6**

(22) Date de dépôt: **06.07.84**

(54) Procédé et installation d'analyse et de restitution de signal à échantillonnage et interpolation.

(30) Priorité: **07.07.83 FR 8311357**

(43) Date de publication de la demande:
**16.01.85 Bulletin 85/3**

(45) Mention de la délivrance du brevet:
**20.04.88 Bulletin 88/16**

(84) Etats contractants désignés:
**BE CH DE GB IT LI**

(56) Documents cités:
**WO - A - 81/03728**
**GB - A - 2 064 244**
**US - A - 4 270 027**

(73) Titulaire: **ELECTRICITE DE FRANCE Service National, 2, rue Louis Murat, F-75008 Paris (FR)**

(72) Inventeur: **Anouar, Driss, 150, rue de la Pompe, F-75116 Paris (FR)**
Inventeur: **Hamelin, Jean-Francois, 43, avenue du Maréchal Joffre, F-78400 Chatou (FR)**

(74) Mandataire: **Fort, Jacques et al, CABINET PLASSERAUD 84, rue d'Amsterdam, F-75009 Paris (FR)**

## Description

L'invention concerne l'analyse et la restitution de signaux. Elle est utilisable chaque fois que l'on souhaite déterminer avec précision l'évolution temporelle d'un signal mesuré par échantillonnage. Elle trouve une application particulièrement importante, bien que non exclusive, dans les systèmes comprenant une centrale de mesure, prévue pour effectuer des opérations de filtrage, d'échantillonnage et de conversion analogique/numérique, ainsi que de multiplexage en cas d'application de plusieurs signaux, et un calculateur muni de périphériques de mémorisation ou de restitution des informations sous forme numérique (tableaux des valeurs du signal à des instants $t_i$ successifs) ou graphique.

Lorsqu'on recherche une précision élevée d'analyse, on adopte à l'heure actuelle une cadence d'échantillonnage très élevée, de façon que les variations du signal entre deux instants d'échantillonnage consécutifs soient faibles. Les points intermédiaires peuvent alors être évalués avec une précision satisfaisante par interpolation linéaire ou par une fonction polynomiale d'ordre faible. Dans le cas d'une restitution sous forme graphique, cette interpolation finale est faite par l'appareil de restitution lui-même qui joint entre eux les échantillons, par des segments de droite dans le cas le plus fréquent, par des segments de cercle ou de sinusoïde sur des appareils performants. Cette approche a l'inconvénient d'exiger la collection d'une quantité de données très importante. On estime que, pour un signal ayant une bande B (la bande du signal étant définie comme la fréquence en deçà de laquelle est contenue 99% de l'énergie du signal), la fréquence d'échantillonnage doit être supérieure à 20 B pour que la précision soit meilleure que $10^{-2}$ dans le cas d'une interpolation linéaire. L'étude de ce type d'interpolation montre qu'une bonne reconstitution du signal, même en utilisant une interpolation polynomiale d'ordre supérieur à 2, exige qu'il y ait un rapport élevé, partiquement supérieur à 5, entre la fréquence d'échantillonnage et la bande du signal.

Dès que la bande passante B devient importante, ce qui est le cas pour les signaux transitoires rapides, le système doit avoir une cadence d'échantillonnage très élevée, un rythme de transmission numérique très important et, lorsque la restitution doit se faire en temps différé, une capacité de stockage en rapport avec les rythmes précédents. Le coût global du système peut en conséquence devenir très élevé.

On sait par ailleurs (théorème de Shannon) qu'on peut calculer n'importe quel point entre deux échantillons consécutifs d'un signal à spectre borné, de bande B, à la seule condition que la fréquence d'échantillonnage $F_e$ soit supérieure à la fréquence de Shannon 2 B. Malheureusement, l'expression analytique du signal x(t) en fonction des échantillons prélevés ne converge que très lentement et donne lieu à des calculs très lourds, difficilement applicables en pratique et excluant pratiquement le fonctionnement en temps réel. En contrepartie, l'utilisation de cette expression autorise, du moins en théorie, une cadence d'échantillonnage beaucoup plus faible que dans le cas précédent, très proche du double de la bande du signal.

D'autres systèmes encore ont été proposés. Ils sont utilisés par exemple sur certains oscilloscopes numériques. Il utilisent une cadence d'échantillonnage modérée comparée à la bande des signaux. Mais ils n'autorisent la reconstitution que dans le cas de signaux sinusoïdaux ou, du moins, périodiques.

On connaît également (US-A 4 270 027) un procédé d'analyse et de restitution de signal analogique échantillonné, suivant lequel on soumet le signal échantillonné à un filtrage puis à une interpolation avec intercalement de zéros. Conformément à la démarche qui vient immédiatement à l'esprit de l'homme de métier, le procédé est mis en œuvre en une seule étape et on introduit, au cours de ces étapes, le nombre total de zéros nécessaires.

L'invention vise à fournir un procédé et une installation d'analyse et de restitution de signal répondant mieux que ceux antérieurement connus aux exigences de la pratique, notamment en ce qu'elle permet d'adopter une cadence d'échantillonnage peu supérieure à la fréquence de Shannon (pratiquement 2,5 à 5 fois la bande passante) tout en permettant de reconstituer avec précision autant de points qu'il est nécessaire entre deux échantillons effectivement enregistrés, et ce en n'utilisant que des moyens relativement simples.

La diminution de la cadence d'échantillonnage par rapport à celles utilisées jusqu'ici pour une analyse précise diminue les données à prélever, à transmettre et à stocker, sans diminution corrélative de la précision d'analyse et sans qu'il soit nécessaire de faire une hypothèse sur la nature du signal. En conséquence, le coût du système est réduit, la réduction portant tant sur l'élément d'acquisition de données, qui peut opérer à une vitesse moins élevée, que sur les moyens de transmission et de transfert des données et sur le calculateur et les moyens de stockage éventuels.

Dans ce but, l'invention propose, selon la revendication 1, un procédé d'analyse et de restitution de signal analogique par échantillonnage du signal à une cadence peu supérieure à la fréquence de Shannon, typiquement comprise entre 2,5 et 5 fois la bande B du signal, et par interpolation, suivant lequel on soumet le signal échantillonné à la cadence $F_e$ à un filtrage puis à une interpolation avec intercalement de zéro, caractérisé en ce que le filtrage est effectué pour la bande de signal B, et en ce que l'interpolation est effectuée en plusieurs étapes conduisant chacune à une multiplication des échantillons en intercalant un seul zéro entre deux échantillons consécutifs disponibles et en soumettant le nouvel ensemble d'échantillons obtenu à un filtrage numérique passe-bas.

Comparé au procédé suivant le document US-A-% 270 027, le procédé suivant l'invention utilise un filtrage passe-bas d'isolement et effectue l'interpolation en plusieurs étapes en intercalant un seul zéro à chaque étape dans chaque intervalle entre deux échantillons disponibles successifs.

On voit que, en introduisant un seul zéro entre deux échantillons consécutifs à chaque étage, avant de filtrer le signal obtenu, on arrive finalement à reconstituer $2^{k-1}$ points entre chaque couple d'échantillons d'origine. Le filtrage met en jeu une succession de filtres passe-bas ayant une bande de transition relative qui peut être beaucoup plus importante que dans le cas où l'on voudrait réaliser l'interpolation en une seule opération. De plus, ces filtres opèrent sur un nombre faible d'échantillons. Il sont donc simples à réaliser et le volume de calcul nécessaire devient parfaitement acceptable.

L'invention propose également, selon la revendication 8, une installation d'analyse et de restitution de signal analogique permettant de mettre en œuvre le procédé défini ci-dessus. L'installation comprend un filtre analogique d'entrée par signal, un convertisseur analogique-numérique et un dispositif d'interpolation. L'installation est caractérisée en ce que, le filtre étant prévu pour isoler la bande de signal B, le dispositif effectue une interpolation en plusieurs étapes conduisant chacune à une multiplication des échantillons en intercalant un seul zéro entre deux échantillons successifs parmi les échantillons disponibles et en soumettant le nouvel ensemble d'échantillons obtenu à un filtrage numérique passe-bas.

La mise en œuvre du procédé suivant l'invention exige que le signal analogique d'entrée soit à bande limitée. Etant donné que le signal utile est pratiquement toujours accompagné d'un bruit, il est nécessaire de la filtrer afin d'éliminer les fréquences supérieures à la bande passante B, ou du moins de les affaiblir suffisamment pour que le bruit de repliement reste acceptable. Le filtrage analogique passe-bas nécessaire doit assurer une réponse en phase très linéaire et avoir une transition entre bande passante et bande coupée d'autant plus raide que l'échantillonnage se fait à une cadence proche de la fréquence de Shannon. Dans la pratique, il sera nécessaire d'utiliser un filtre ayant un nombre de pôles élevé, et on pourra notamment utiliser un filtre de Bessel ou un filtre de Butterworth. Mais dans la pratique il n'est pas possible d'obtenir une réponse en amplitude parfaitement plate en bande passante. Cette imperfection peut être compensée au cours de la première étape d'interpolation, par un choix approprié des coefficients du filtre numérique utilisé.

L'invention propose également une installation d'analyse permettant de mettre en œuvre le procédé ci-dessus défini.

L'invention sera mieux comprise à la lecture de la description qui suit de modes particuliers d'exécution de celle-ci, donnés à titre d'exemples non limitatifs. La description se réfère aux dessins qui l'accompagnent, dans lesquels:

– la Fig. 1 est un synoptique de principe montrant la constitution d'une installation de mesure à laquelle est applicable l'invention;

– les Figures 2A, 2B et 2C sont des diagrammes destinés à faire apparaître le principe de fonctionnement d'un filtre numérique d'interpolation et montrent respectivement le spectre $|X_{e(f)}|$ périodisé obtenu après échantillonage à la fréquence $F_e$, la réponse $|H(f)|$ en amplitude du filtre passe-bas utilisé après ré-échantillonnage fictif du signal à un multiple entier K de la fréquence $F_e$, et le spectre obtenu après échantillonnage à $F_i$ et filtrage (Fi = K Fe):

– les Figures 3A, 3B et 3C, similaires aux Figures 2, font apparaître la raideur qui serait requise de la bande de transition dans le cas d'une seule étape d'interpolation;

– les Figures 4A, 4B et 4C, encore similaires aux Figures 2, correspondent à une étape d'interpolation avec introduction d'un seul zéro entre deux échantillons successifs;

– les Figures 5, 6, 7 et 8 sont des programmes.

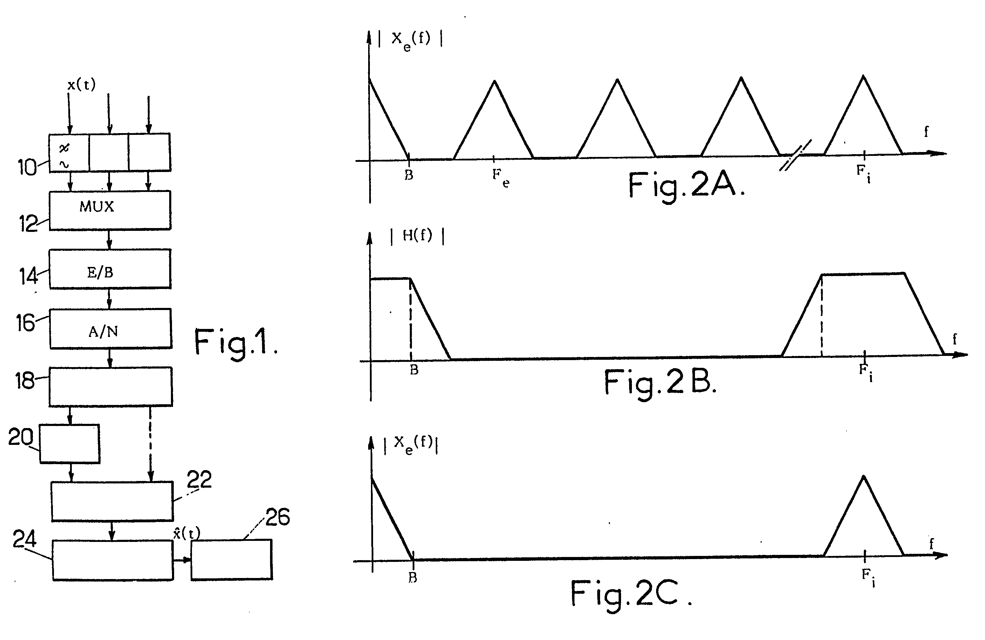

Pour simplifier, et à titre d'exemple, on supposera l'invention appliquée à une installation de mesure du genre montré en Figure 1, destinée à restituer, sous forme numérique ou analogique, des signaux d'entrée tels x(t). Cette installation comprend, pour chaque entrée, un filtre passe-bas destiné à exclure, ou du moins à atténuer fortement, le bruit hors de la bande B du signal. Ce filtre analogique 10 passe-bas, qui joue le rôle de filtre anti-repliement, doit répondre, dans le cas de l'invention, à des caractéristiques particulières qui seront mentionnées plus loin. Lorsque l'installation est destinée à recevoirt plusieurs signaux d'entrée, elle comporte ensuite un multiplexeur 12 qui attaque un échantillonneur-bloqueur 14. Les échantillons successifs fournis par l'échantillonneur-bloqueur, à une cadence qui est généralement la même pour toutes les entrées, sont numérisés par un convertisseur analogique/numérique 16 et fournis à un émetteur 18.

L'ensemble des composants 10 à 18 peut constituer une centrale de mesure dont les résultats sont stockés dans une mémoire 20 ou envoyés directement à un récepteur 2. Dans le premier cas, il est possible de travailler en temps différé. Mais, quelle que soit la solution retenue, le récepteur 22 alimente un calculateur 24 destiné à réaliser l'expansion de données par interpolation afin de restituer, à partir des échantillons prélevés à cadence $F_e$, des échantillons à fréquence multiple de la précédente, comprenant, en plus des échantillons d'origine, des échantillons obtenus par interpolation. L'ensemble des échantillons est appliqué à un dispositif d'édition 26 qui peut être numérique (unité de mémoire, imprimante fournissant un tableau de valeurs,...) ou analogique et assurant une interpolation supplémentaire linéaire ou polynomiale (table traçante, oscilloscope,...).

On va maintenant décrire les principes du mode d'interpolation par filtrage numérique qui est appliqué aux échantillons, à cadence $F_e$ (donc présentant un spectre périodique de période $F_e$)

d'un signal de bande B, définie par la fréquence limite $F_m$.

On utilisera uniquement des filtres numériques non récursifs à réponse impulsionnelle finie ou «RIF» qui ont l'avantage d'être facilement réalisables avec une réponse en phase linéaire et qui sont stables du fait du caractère non récursif.

Un filtre de ce type est caractérisé par le nombre N de ses coefficients $a_i$, i variant de 0 à N-1, qui constitue sa réponse impulsionnelle. La fonction de transfert en amplitude H(f) du filtre s'écrit alors:

$$H(f) = \sum_{i=0}^{N-1} a_i e - j2\pi\varphi\iota T_e$$

$T_e$ étant la période d'échantillonnage.

Si les coefficients sont symétriques, H(f) peut se mettre sous la forme simplifiée:

$$H(f) = G(f) \exp[-j(2\pi F\tau + a)]$$

Dans cette formule, G(f) est une fonction réelle, $\tau$ et a sont deux constantes, $\tau$ représentant le temps de propagation du filtre, égal à un multiple entier de la demipériode d'échantillonnage. On choisira en règle générale un filtre dont le nombre de coefficients N est impair pour que la symétrie soit positive et que le temps de propagation soit un multiple entier de la période d'échantillonnage.

L'interpolation à l'aide d'un tel filtre vise à reconstituer, à partir du spectre périodisé par échantillonnage à fréquence $F_e$ (Figure 2A), le signal d'origine, ou du moins des échantillons à fréquence $F_i = KF_e$ (K étant un entier positif). Pour cela, on rééchantillonne fictivement, à la fréquence $F_i$, le signal échantillonné en introduisant K-1 zéros entre chaque couple d'échantillons enregistrés avant de soumettre le nouvel ensemble d'échantillons à un filtrage passe-bas dont la réponse |H(f)| est celle donnée en Figure 2B. L'échantillonnage à la cadence $F_i$ du signal déjà échantillonné à cadence $F_e$ provoque une seconde périodisation du spectre autour de la fréquence $F_i$ qui introduit un facteur multiplicatif (K-1) dans le spectre en bande de base. Le spectre obtenu après cet échantillonnage à fréquence $F_i$ et filtrage passe-bas n'est en conséquence pas réduit au spectre en bande de base du signal d'entrée x(t). Il comporte ds composantes périodiques autour des multiples de $F_i$ (Figure 2C). Mais ces composantes à haute fréquence sont aisément éliminées par l'opération de filtrage analogique réalisée lors de la représentation graphique du signal. On pourrait penser que la solution simple consiste à effectuer l'opération d'interpolation (introduction des zéros et filtrage passebas) en une seule étape. Pour cela, à partir de l'ensemble de N échantillons primaires effectivement prélevés:

$$E_p = \{x(t), x(t+T_e), x(t+2T_e), \ldots, x(t+iT_e), \ldots, x(t+(N-1)T_e)\},$$

On passe par un ensemble intermédiaire:

$$E_i = \{x(t), \underbrace{0,0,\ldots,0}_{(K-1)}, x(t+T_e), 0,0,\ldots,\ldots, x(t+iT_e), 0,\ldots, 0,\ldots, x(t+(N-1)T_e)\}$$

et on soumet cet ensemble intermédiaire à un filtrage numérique dont la fonction de transfert est celle d'un filtre passe-bas de largeur B, l'ensemble $E_i$ étant interprété comme un échantillonnage à $F_i$ du signal échantillonné à $F_e$.

On arrive ainsi à une ensemble $E_S$ de KxN échantillons secondaires:

$$E_S = \{x(t), x(t+\frac{T_e}{K}), x(t+2\frac{T_e}{K}), \ldots, x(t+iT_e), x(t+iT_e+\frac{T_e}{K}), \ldots, x(t+(N-1)T_e)\}$$

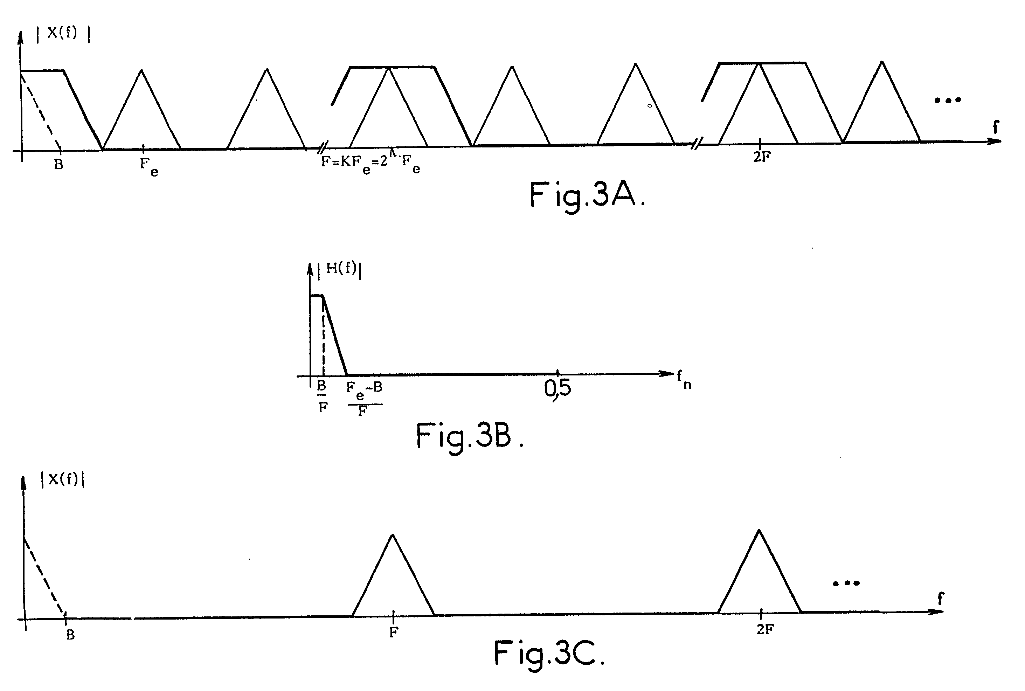

Mais une analyse de la constitution d'un tel filtre montre qu'il doit éliminer toutes les composantes ayant une fréquence comprise entre B et F-B (F étant la cadence désirée après interpolation). La fonction de transfert |H(f)| du filtre doit donc être celle montrée en Figure 3B pour l'échantillonnage montré en Figure 3A. la bande de transition relative (zone entre la bande passante et la bande coupée) doit être très faible ou, en d'autres termes, le filtre doit avoir une raideur de coupure importante si on veut éviter le repliement de spectre. Or, un tel filtre est difficilement réalisable et nécessite un nombre de coefficients élevé.

Cette difficulté est écartée en réalisant l'interpolation en plusieurs étapes successives, correspondant chacune à une multiplication du nombre des échantillons, ce qui conduit à ce que l'on peut appeler un filtrage multicadence. Comme on le verra plus loin, les filtres passe-bas utilisés dans ce cas peuvent avoir une bande de transition relative beaucoup plus importante que celle d'un filtre unique et opérer sur un nombre beaucoup plus faible d'échantillons.

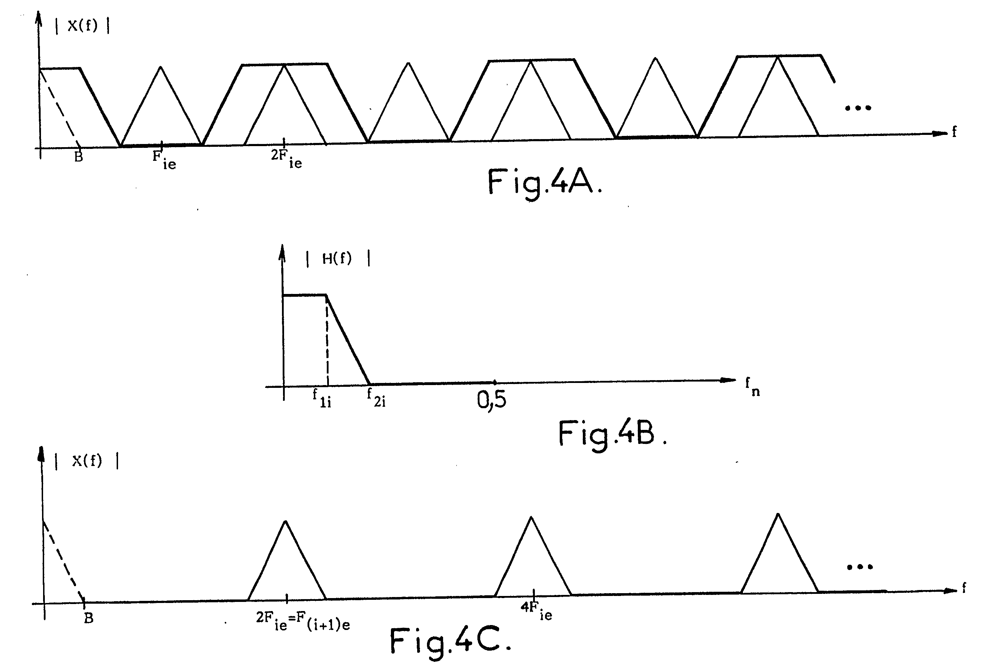

La solution montrée en Figure 4 consiste à introduire un seul zéro entre deux échantillons consécutifs é chaque étape, puis à filtrer le signal ainsi obtenu. Puis on recommence les mêmes opérations pour aboutir finalement, après M étapes, à la fréquence d'échantillonnage F:

$$F = 2^M \cdot F_e$$

Les Figures 4A, 4B et 4C correspondent à l'étape d'ordre i, pour laquelle la fréquence d'échantillonnage est $F_{ie}$.

Comme cela a déjà été indiqué plus haut, le filtre analogique anti-repliement, destiné à éliminer les bruits de fond, ne peut évidemment avoir des caractéristiques parfaites, c'est-à-dire une réponse en amplitude $|H(f)|$ parfaitement plate en bande passante et nulle en bande coupée, avec une transition sur un intervalle de fréquence nulle, et une phase parfaitement linéaire, se réduisant à un retard pur. Le calcul montre en particulier que, pour une fréquence d'échantillonnage $F_e$ égale à trois la bande B, il faudrait, pour limiter le bruit de repliement à une valeur inférieure à 1%, une raideur de coupure supérieure à 40 dB/octave et une atténuation en bande coupée supérieure à 40 dB (si on suppose que la somme signal +bruit est constante dans la bande d'analyse et à l'extérieur). Et, pour limiter l'erreur due aux déformations en bande passante à 1%, il faudrait que cette bande corresponde à des variations d'atténuation non pas de 3 dB comme on le fait d'habitude, mais sur 0,086 dB. La réduction de bande passante correspondante est très importante.

Pour un filtre de Butterworth à six pôles, qui fournit une atténuation de 36 dB par octave dans la zone de transition, la bande passante à 0,086 dB représente 0,6 fois la bande passante à 3 dB. Le rapport correspondant est respectivement de 0,9, 0,1 et 0,2 pour des filtres de Tchebychev, de Bessel et de Legendre.

On verra plus loin que le filtre doit, de plus, avoir une réponse en phase sensiblement linéaire, ce qui conduit en général à utiliser un filtre de Bessel ou un filtre de Butterworth. La réduction de bande passante mentionnée ci-dessus fait apparaître qu'une correction est nécessaire. Elle est avantageusement effectuée lors du premier filtrage numérique d'interpolation, les coefficients de filtre étant calculés pour donner une fonction de transfert inverse de celle du filtre d'entrée dans la zone passante. Il est important de noter que cette opération n'augmente pas la complexité du filtre, mais suppose seulement la connaissance précise des caractéristiques du filtre analogique d'entrée et un calcul supplémentaire, fait une fois pour toutes.

Naturellement, si le bruit ne répond pas à l'hypothèse faite ci-dessus d'une répartition homogène dans la bande passante et au-dehors, mais se situe loin de la fréquence de coupure, un filtre de pente modérée dans la zone de coupure peut convenir, ce qui simplifie notablement, ou fait même disparaître, le problème de la correction de la fonction de transfert en amplitude du filtre analogique.

Toute non linéarité de la réponse en phase du filtre analogique dans la bande passante constitue également une source d'erreur et, pratiquement, il faut que la réponse en phase du filtre soit linéaire à moins de 1° sur la bande B du signal analysé. Cette non linéarité de la réponse en phase peut toutefois être corrigée en une seule fois par l'utilisation d'un filtre passe-tout approprié, situé immédiatement en aval du filtre analogique d'élimination du bruit de fond.

Dans la pratique, ces contraintes conduiront généralement à utiliser comme filtre analogique:
- soit un filtre de Bessel dont la fréquence de coupure à 3 dB est égale à B.
- soit un filtre de Butterworth, dont la fréquence de coupure à 3 dB est égale à 3 B.

L'ordre du filtre choisi sera déterminé par les caractéristiques du bruit présent sur le signal. Cet ordre a également un effet sur la dispersion de phase, comme le montre le tableau suivant:

Filtre Butterworth d'ordre 6: dispersion de 1,2° à 0,4 fois la fréquence de coupure, 32° à 0,9 fois.

Filtre Butterworth d'ordre 3: dispersion de 0,9 à 0,4 fois la fréquence de coupure, 16° à 0,9 fois.

Filtre Butterworth d'ordre 8: dispersion de 1° à 0,4 fois la fréquence de coupure, 41° à 0,9 fois.

Ce tableau fait apparaître que la bande passante du filtre de Butterworth doit être nettement supérieure à B.

En résumé, on est conduit à utiliser soit un filtre à réponse linéaire en phase, pratiquement un filtre de Bessel d'ordre 5 ou plus, mais avec l'inconvénient d'une raideur de coupure de 14 dB par octave au maximum, ce qui exige de mettre plusieurs filtres en cascade pour obtenir une raideur dépassant 40 dB par octave et à effectuer une correction en amplitude importante, soit un filtre à réponse en phase non linéaire, ce qui implique l'adjonction d'un filtre passetout, généralement numérique, dont les coefficients sont calculés pour produire une réponse en phase qui compense la dispersion de celle du filtre analogique.

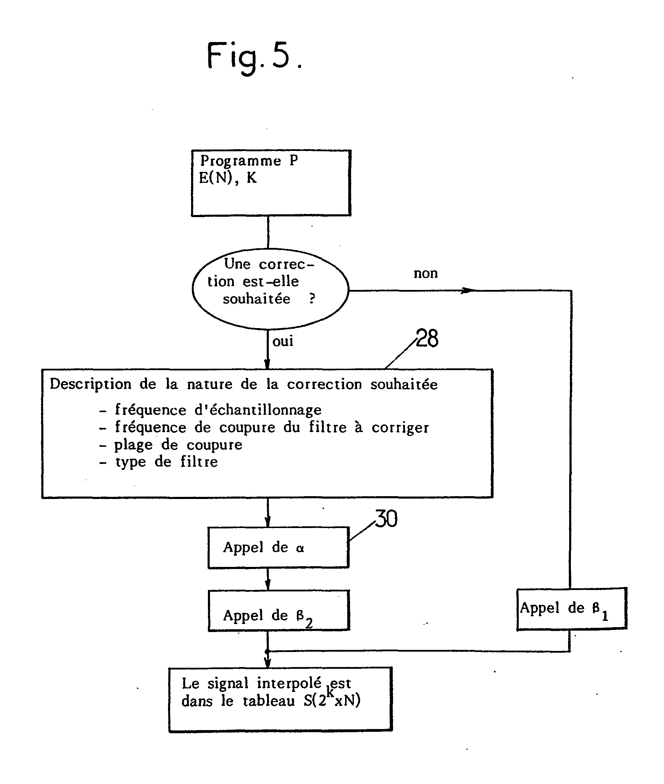

L'interpolation peut être effectuée par un appareil prévu à cet effet aussi bien que par un calculateur d'usage général programmé à cet effet. Mais dans tous les cas, l'organigramme P mis en œuvre sera du genre montré en Figure 5, afin de fournir, à partir d'un tableau E(N) de N échantillons enregistrés, un fichier F constitué de $2^K$. N échantillons (K étant un entier positif) correspondant au même intervalle de temps que les N échantillons primitifs.

Deux cas peuvent se présenter, selon qu'une correction du filtrage antérieur anti-repliement est requise ou non.

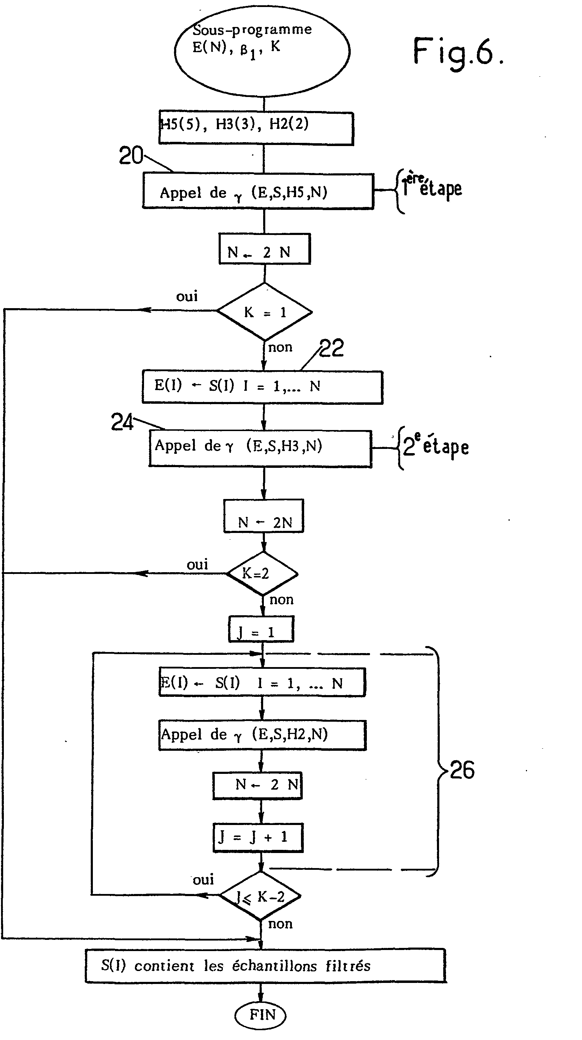

Dans le cas où aucune correction n'est nécessaire ou souhaitée, on applique un sous-programme $\beta_1$ dont l'organigramme est du genre donné en Figure 6, qui correspond au cas d'une interpolation en K étapes d'interpolation dans un facteur 2. Les filtrages sont effectués par des filtres RIF ayant un vecteur de coefficients:

$H_5$ pour la première interpolation
$H_3$ pour la seconde interpolation
$H_2$ pour la troisième interpolation et chacune des suivantes.

Les vecteurs de coefficients sont affichés avant mise en œuvre du sous-programme. Ces vecteurs de coefficients peuvent être calculés en utilisant le programme d'optimisation décrit par L.R. Rabiner et B. Gold dans «Theory and application of digital signal processing», Englewood Cliffs Prentice Hall, 1975, modifié pour calculer les coefficients des filtres demi-bande. A titre d'exemple, on peut indiquer qu'on a obtenu des résultats satisfaisants en utilisant:

– dans la première étape, un filtre à vingt et un coefficients (dont dix coefficients nuls et cinq coefficients symétriques),
– à la seconde étape, un filtre à treize coefficients (dont six nuls et trois symétriques),
– aux étapes ultérieures, un filtre à neuf coefficients (dont quatre nuls et deux symétriques).

Lorsque la fréquence d'échantillonnage est supérieure à trois fois la bande du signal, on arrive à une interpolation dont la précision dépasse $10^{-3}$ avec les coefficients suivants:

| 1er filtre: $H_5$ | 0,035 | – ,0130 | ,0349 | – ,0861 | ,311 |
|---|---|---|---|---|---|
| 2ème filtre: $H_3$ | ,0083 | – ,05515 | ,2969 | | |
| 3ème filtre et suivants: $H_2$ | – ,0329 | ,28285 | | | |

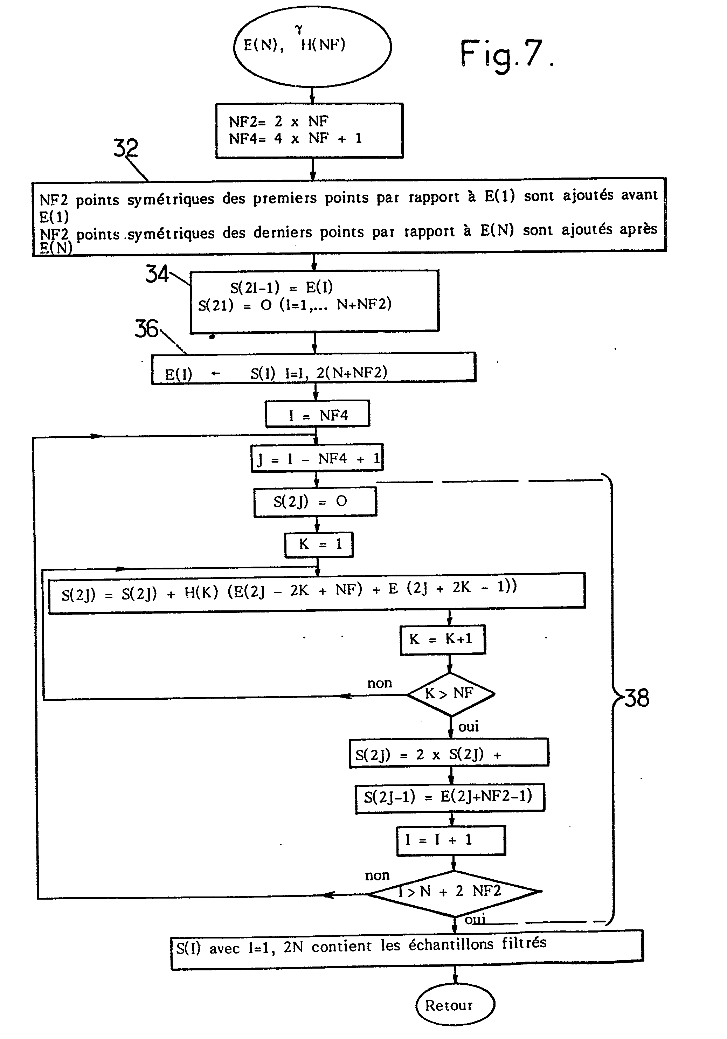

Chaque étape correspond à l'application d'une routine dont l'organigramme est donné en Figure 7. La première étape d'interpolation (phase 20) met en œuvre le vecteur de coefficients $H_5$. Un test est appliqué. Le programme se poursuit si la valeur de K affichée à l'origine est supérieure à 1. Le tableau d'échantillons obtenus à l'iisue de la première étape d'interpolation est substitué aux échantillons d'origine (phase 22). la routine $\gamma$ est de nouveau appliquée (phase 24) et le programme se poursuit jusqu'à ce que le nombre d'interpolations prévu au départ ait été effectué, chacune des interpolations à partir de la troisième étant effectuée avec le même vecteur de coefficient $H_2$ et correspondant à la séquence 26.

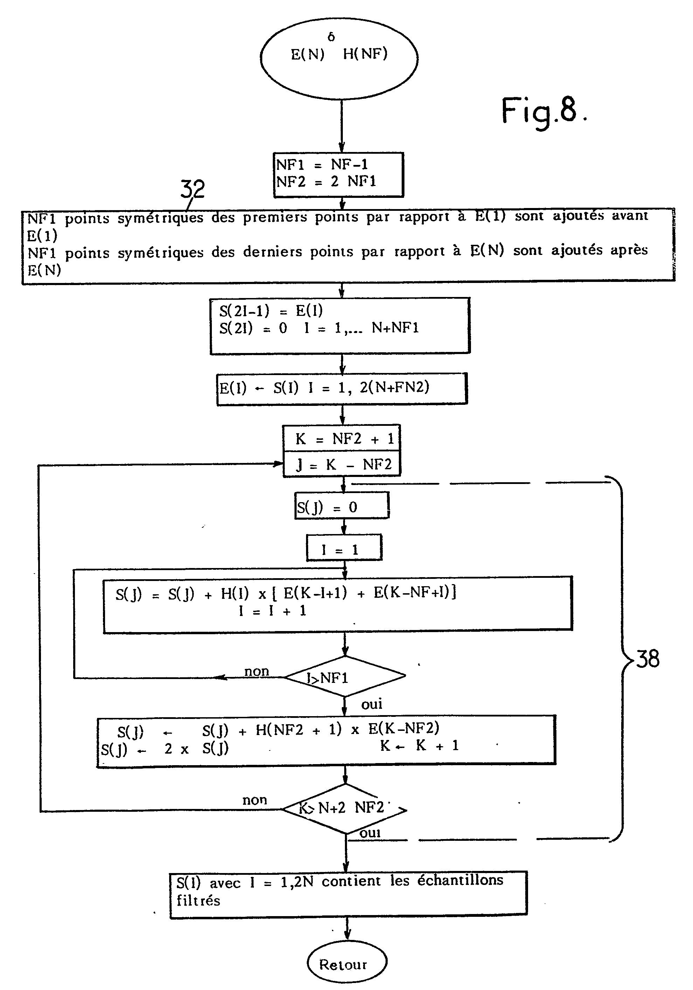

Si au contraire une correction est nécessaire, ses charactéristiques sont affichées (phase 28 sur la Figure 5). La nature de la correction est identifiée par la fréquence d'échantillonnage, la fréquence de coupure du filtre analogique à corriger, la plage de coupure et le type de filtre. A partir de ces paramètres doivent être calculés les coefficients de la première étape d'interpolation, coefficients qui vont se substituer au vecteur de coefficients $H_5$ du programme $\beta_1$. Le calcul des coefficients s'effectue par appel d'une routine $\alpha$ (phase 30 sur la Figure 5). Cette routine peut être constituée par le programme de MacClellan, Parks, et Rabiner (IEEE Transactions on Audio and Electroacoustics, 1973), adapté au problème particulier posé ici et complété pour qu'il y ait transfert immédiat des coefficients calculés à la première étape du sous-programme $\beta_2$. Ce dernier est identique au programme $\beta_1$, si ce n'est que la routine $\delta$ (Figure 8) est substituée à la routine $\gamma$ au cours de la première étape d'interpolation.

La routine $\delta$ correspond à l'utilisation d'un filtre à réponse impulsionnelle symétrique de type quelconque, dont le nombre total de coefficients est cette fois égal à 2 NF–1. En d'autres termes, il s'agit d'un filtre symétrique, mais n'ayant pas de coefficient nul a priori.

Les routines $\gamma$ et $\delta$ sontr très similaires. Il y a chaque fois adjonction de $NF_1$ (ou $NF_2$) points symétriques des premiers points par rapport à E(1) et des derniers points par rapport à E(N) pour éviter les effets de bord (phase 32).

Puis un zéro est intercalé entre chaque point initial (phases 34 et 36). les échantillons filtrés sont ensuite calculés (Séquence 38) et utilisant toutes les symétries et la nullité de certains coefficients et valeurs du signal, dans le cas de la routine $\gamma$. Dans les routines N désigne le nombre d'échantillons à filtrer, NF le nombre minimal de coefficients à fournir pour retrouver l'ensemble des coefficients du filtre interpolateur à appliquer; H(I), avec I = 1,..., N désigne les coefficients du filtre à appliquer et E(I) désigne les échantillons à filtrer.

Il faut noter au passage que le vecteur des coefficients H(NF) de la routine $\gamma$ a (4NF+1) coefficients, mais que tous ces coefficients sont reconstitués à partir de NF coefficients de base, par symétrie dans une première étape et du fait qu'un coefficient sur deux est nul et que le coefficient médian est toujours égal à 0,5.

Si on désigne par $a_i$ les coefficients, le sous-programme d'interpolation en demi-bande calcule:

$$(1)\ S_j = \sum_{i=1}^{4NF+1} a_i \cdot e_{j-i}$$

Dans cette formule, $e_i$ désigne les échantillons fournis par l'étape précédente d'interpolation ou les échantillons enregistrés lors de la première étape, entre lesquels ont été intercalés les zéros. Cette formule est évidemment simplifiée du fait que $e_{j-i}$ est nul une fois sur deux, que certains des $a_i$ sont nuls et les autres deux à deux symétriques.

Dans le cas où le filtrage d'interpolation est précédé par un filtrage numérique passe-tout dont les coefficients sont prévus pour produire une réponse en phase qui compense la dispersion du filtre analogique, les coefficients du premier étage d'interpolation (routine $\delta$) peuvent être prévus pour compenser la distorsion en amplitude du filtre passe tout, en même temps que la fonction de transfert en amplitude du filtre analogique passe-bas.

Les coefficients du filtre numérique à RIF passe tout de correction seront choisis pour fournir un gain unité et fournir une phase $\varphi_c(f)$ qui compense la dispersion de la phase $\varphi(f)$ du filtre à corriger, par rapport à la droite $D(f) = 2\pi f\tau$. La fonction de transfert $F_N(f)$ du filtre doit donc être:

$$F_N(f) = \exp(j\varphi_c f) \text{ où } \varphi_C(f) = D(f) - \varphi(f).$$

Le calcul des coefficients s'en déduit par un processus classique, tel celui décrit par D. Anouar dans «Conception et réalisation d'un filtre numérique», TELECOM 1981. Un filtre à quarante-neuf coefficients suffit lorsque la dispersion en phase ne dépasse pas 1°.

Le procédé suivant l'invention est également utilisable pour recaler entre elles des voies de signal d'entrée dont l'échantillonnage est effectué à un instant différent. Ce cas est celui illustré en Figure 1 où plusieurs voies d'entrées sont appliquées à un même multiplexeur 12 attaquant un même échantillonneur-bloqueur 14. Il suffit dans ce cas d'effectuer une interpolation d'un ordre K suffisamment élevé pour que l'on dispose, sur chaque voie, de la valeur du signal d'entrée à un même instant commun à toutes les voies. Cette expansion du signal permet fréquemment d'éviter l'utilisation d'un échantillonneur-bloqueur par voie, ce qui représente une économie notable.

**Revendications**

1. Procédé d'analyse et de restitution de signal analogique par échantillonnage du signal à une fréquence ($F_e$) ne dépassant pas 2,5 fois la fréquence de Shannon et typiquement comprise entre 2,5 et 5 fois la bande B du signal et par interpolation suivant lequel on soumet le signal échantillonné à la cadence ($F_e$) à un filtrage puis à une interpolation avec intercalement de zéro, caractérisé en ce que le filtrage est effectué pour la bande de signal B, et en ce que l'interpolation est effectuée en plusieurs étapes conduisant chacune à une multiplication des échantillons en intercalant un seul zéro entre deux échantillons consécutifs disponibles et en soumettant le nouvel ensemble d'échantillons obtenu à un filtrage numérique passe-bas.

2. Procédé selon la revendication 1, caractérisé en ce que le filtre analogique passe-bas n'étant pas entièrement linéaire en phase, on compense l'effet de ce filtre par un filtrage numérique passe-tout dont la fonction de transfert dans la bande passante compense la dispersion en phase du filtre analogique.

3. Procédé selon l'une quelconque des revendications 1 et 2, caractérisé en ce que la première étape d'interpolation est prévue pour compenser la dispersion en amplitude de la fonction de transfert du filtre analogique passe-bas d'isolement de la bande passante et, eventuellement, la dispersion en amplitude du filtre passe-tout.

4. Procédé selon l'une quelconque des revendications précédentes, caractérisé en ce que le filtrage analogique passe-bas est effectué avec un filtre dont la réponse en phase est linéaire à moins de 1° sur la bande du signal analysé.

5. Procédé selon l'une quelconque des revendications précédentes, caractérisé en ce que l'on utilise des filtres ayant un nombre de coefficients décroissant à partir du premier.

6. Procédé selon la revendication 5, caractérisé en ce qu'on utilise, au moins au cours des étapes autres que la première, des filtres présentant des coefficients nuls, un coefficient médian égal à 0,5 et des coefficients restant deux à deux symétriques.

7. Procédé selon la revendication 6, caractérisé en ce que la fréquence d'échantillonnage étant supérieure à trois fois la bande du signal, on utilise, au cours de la première étape un filtre à vingt et un coefficients, à la deuxième étape un filtre à treize coefficients et, aux étapes ultérieures, un filtre à neuf coefficients.

8. Installation d'analyse et de restitution de signal analogique par échantillonnage du signal à une fréquence (Fe) ne dépassant pas 2,5 fois la fréquence de Shannon et typiquement comprise entre 2.5 et 5 fois la bande du signal et par interpolation, comprenant un filtre analogique d'entrée (10) par signal, un convertisseur analogique-numérique (16) et un dispositif d'interpolation (24), caractérisée en ce que, le filtre (10) étant prévu pour isoler la bande de signal B, le dispositif effectue une interpolation en plusieurs étapes conduisant chacune à une multiplication des échantillons en intercalant un seul zéro entre deux échantillons successifs parmi les échantillons disponibles et en soumettant le nouvel ensemble d'échantillons obtenu à un filtrage numérique passe-bas.

9. Installation selon la revendication 8, destinée à analyser et restituer plusieurs signaux d'entrée arrivant sur des voies différentes, comprenant un multiplexeur (12) alimentant un seul échantillonneur-bloqueur (14) suivi d'un convertisseur analogique-numérique (16), caractérisée en ce que le dispositif d'interpolation (24) est prévu pour réaliser une interpolation d'ordre suffisamment élevé pour fournir sur chaque voie la valeur du signal correspondant à un même instant commun à toutes les voies.

**Patentansprüche**

1. Verfahren zur Zerlegung und Wiederherstellung eines Analogsignals durch Abtasten des Signals bei einer Frequenz ($F_e$), die das 2,5-fache der Shannon-Frequenz nicht übersteigt und typischerweise zwischen dem 2.5- und 5-fachen des Bandes B des Signals liegt, und durch Interpolation, gemäss der man das im Takt ($F_e$) abgetastete Signal einer Filterung und dann einer Interpolation mit Einfügung von Null unterwirft, dadurch gekennzeichnet, dass die Filterung für das Band des Signals B ausgeführt wird, und dass die Interpolation in mehreren Stufen, die jeweils zu einer Vermehrung der Abtastwerte führen, durch Einfügen einer einzelnen Null zwischen zwei verfügbaren aufeinanderfolgenden Abtastwerten und Unterwerfen der erhaltenen Gesamtheit von Abtastwerten unter eine numerische Tiefpassfilterung ausgeführt wird.

2. Verfahren nach Anspruch 1, dadurch gekennzeichnet, dass man, wenn der analoge Tiefpassfilter nicht vollständig phasenlinear ist, die Wirkung dieses Filters durch eine numerische Allpassfilterung kompensiert, deren Übertragungsfunktion in der hindurchgehenden Bande die Phasenstreuung des Analogfilters kompensiert.

3. Verfahren nach irgendeinem der Ansprüche 1 oder 2, dadurch gekennzeichnet, dass die erste Stufe der Interpolation so beschaffen ist, dass sie die Amplitudenstreuung der Übertragungsfunktion des Tiefpass-Analogfilters zur Isolierung der hindurchgehenden Bande und gegebenenfalls die Amplitudenstreuung des Allpassfilters kompensiert.

4. Verfahren nach irgendeinem der vorhergehenden Ansprüche, dadurch gekennzeichnet, dass die Tiefpass-Analogfilterung mit einem Filter durchgeführt wird, dessen Phasengang bezüglich der Bande des analysierten Signals bis zumindest einem Grad linear ist.

5. Verfahren nach irgendeinem der vorhergehenden Ansprüche, dadurch gekennzeichnet, dass man Filter verwendet, die ausgehend vom ersten Filter eine abnehmende Anzahl Koeffizienten haben.

6. Verfahren nach Anspruch 5, dadurch gekennzeichnet, dass man zumindest im Verlauf der von der ersten Stufe verschiedenen Stufen Filter verwendet, die Koeffizienten Null, einen Mediankoeffizient gleich 0,5 und im übrigen Koeffizienten aufweisen, die jeweils paarweise symmetrisch sind.

7. Verfahren nach Anspruch 6, dadurch gekennzeichnet, dass man, wenn die Abtastfrequenz mehr als das Dreifache des Signalbandes beträgt, im Verlauf der ersten Stufe einen Filter mit einundzwanzig Koeffizienten, bei der zweiten Stufe einen Filter mit dreizehn Koeffizienten, und bei den nachfolgenden Stufen einen Filter mit neun Koeffizienten verwendet.

8. Einrichtung zur Zerlegung und Wiederherstellung eines Analogsignals durch Abtasten des Signals bei einer Frequenz (Fe), die das 2,5-fache der Shannon-Frequenz nicht übersteigt, und typischerweise zwischen dem 2,5- und 5-fachen des Bandes des Signals liegt, und durch Interpolation, welche einen Analogfilter (10) für den Eingang des Signals, einen Analog/Digital-Umsetzer (16) und eine Interpolationsvorrichtung (24) umfasst, dadurch gekennzeichnet, dass der Filter (10) zur Isolierung des Bandes des Signals B vorgesehen ist, und die Vorrichtung eine Interpolation in mehreren Stufen, die jeweils zu einer Vermehrung der Abtastwerte führen, durch Einfügen einer einzelnen Null zwischen zwei aufeinanderfolgenden Abtastwerten unter den verfügbaren Abtastwerten und durch Unterwerfung der erhaltenen neuen Gesamtheit von Abtastwerten unter eine numerische Tiefpassfilterung ausführt.

9. Einrichtung nach Anspruch 8, die dazu bestimmt ist, mehrere auf verschiedenen Kanälen ankommende Eingangssignale zu zerlegen und wiederherzustellen, und die einen Multiplexer (12) umfasst, der eine einzige S&H Schaltung (14), gefolgt von einem Analog/Digital-Umsetzer versorgt, dadurch gekennzeichnet, dass die Interpolationsvorrichtung (24) so beschaffen ist, dass sie eine Interpolation ausführt, deren Ordnung ausreichend hoch ist, um auf jedem Kanal den Wert des Signals zu liefern, der einem gleichen Moment entspricht, der allen Kanälen gemeinsam ist.

**Claims**

1. A process for analyzing and retrieving an analog signal by sampling the signal and the frequency $(F_e)$ of no more than 2.5 times the Shannon frequency and typically between 2.5 and 5 times the band (B) of the signal and by interpolation, according to which the signal sampled at the rate $(F_e)$ is subjected to filtering then to an interpolation with insertion of zeros, characterized in that filtering is carried out for the signal band B and in that interpolation is carried out in several steps each leading to a multiplication of the samples by inserting a single zero between two successive available samples and subjecting the new set of samples so obtained to digital low pass filtering.

2. Process according to claim 1, characterized in that, the low pass analog filter not being entirely linear in phase, the effect of the filter is compensated for by digital pass-all filtering whose transfer function in the pass band compensates for the phase dispersion of the analog filter.

3. Process according to any one of claims 1 and 2, characterized in that the first interpolation step is provided for compensating for the amplitude dispersion of the transfer function of the analog low pass filter for isolating the pass band and, possibly, the amplitude dispersion of the pass-all filter.

4. Process according to any one of the preceding claims, characterized in that the low pass analog filtering is carried out with a filter whose phase response is linear within one degree over the band of the analyzed signal.

5. Process according to any one of the preceding claims, characterized in that filters are used having a number of coefficients decreasing from the first filter.

6. Process according to claim 5, characterized in that, at least during the steps other than the first one, filters are used having zero coefficients, a median coefficient equal to 0.5 and remaining coefficients mutually symmetrical two by two.

7. Process according to claim 6, characterized in that, the sampling frequency being greater than three times the band of the signal during the first step a filter with twenty-one coefficients is used; during the second step a filter with thirteen coefficients is used; and during the subsequent steps, a filter with nine coefficients is used.

8. An installation for analyzing and retrieving an analog signal by sampling the signal at a frequency $(F_e)$ which does not exceed 2.5 times the Shannon frequency and is typically of from 2.5 to 5 times the band of the signal and by interpolation, comprising an analog input filter (10) per signal, an analog-digital converter (16) and an interpolation device (24), characterized in that, the filter (10) being provided for isolating the signal band B, the device carries out an interpolation in several steps each leading to a multiplication of the samples by inserting a single zero between two successive samples among the available samples and subjecting the new set of samples so obtained to digital low pass filtering.

9. Installation according to claim 8, for analyzing and retrieving a plurality of input signals arriving over different channels, comprising a multiplexer (12) feeding a single sample-and-hold circuit (14) followed by an analog-digital converter (16), characterized in that the interpolation device (24) is provided for carrying out an interpolation of a sufficiently high order for supplying the value of the corresponding signal at the same time, common to all the channels, on each channel.

Fig.1.

$|X_e(f)|$

B      $F_e$        $F_i$    f

Fig.2A.

$|H(f)|$

B      $F_i$    f

Fig.2B.

$|X_e(f)|$

B      $F_i$    f

Fig.2C.

0 131 521

0 131 521

$|X(f)|$

B    $F_e$    $F=KF_e=2^N F_e$    $2F$    f

Fig.3A.

$|H(f)|$

$\frac{B}{F}$    $\frac{F_e-B}{F}$    0,5    $f_n$

Fig.3B.

$|X(f)|$

B    F    2F    f

Fig.3C.

Fig.4A.

Fig.4B.

Fig.4C.

0 131 521

# Fig. 5.

```
┌─────────────────┐
│ Programme P     │
│ E(N), K         │
└─────────────────┘
         │
    ╭─────────────╮
    │ Une correc- │                non
    │ tion est-elle │ ─────────────────────────┐
    │ souhaitée ?  │                           │
    ╰─────────────╯                           │
         │ oui              ⁄28               │
         ▼                                     │
┌──────────────────────────────────────────┐ │
│ Description de la nature de la correction  │ │
│ souhaitée                                  │ │
│                                            │ │
│   – fréquence d'échantillonnage            │ │
│   – fréquence de coupure du filtre à corriger│
│   – plage de coupure                       │ │
│   – type de filtre                         │ │
└──────────────────────────────────────────┘ │
         │                  30                 │
         ▼                                     │
┌──────────────────┐                          │
│ Appel de α       │                          │
└──────────────────┘                          │
         │                         ┌──────────────────┐
         ▼                         │ Appel de β₁       │
┌──────────────────┐              └──────────────────┘
│ Appel de β₂      │                          │
└──────────────────┘                          │
         │─────────────────────────────────────┘
         ▼
┌──────────────────────────────┐
│ Le signal interpolé est       │
│ dans le tableau S(2ᵏxN)       │
└──────────────────────────────┘
```

**0 131 521**

Fig.6.

Sous-programme
E(N), $\beta_1$, K

H5(5), H3(3), H2(2)

20

Appel de $\gamma$ (E,S,H5,N) — { 1$^{ère}$ étape

N ← 2 N

oui — K = 1

non — 22

E(I) ← S(I)  I = 1,... N

24

Appel de $\gamma$ (E,S,H3,N) — { 2$^e$ étape

N ← 2N

oui — K=2

non

J = 1

E(I) ← S(I)  I = 1, ... N

Appel de $\gamma$ (E,S,H2,N)

N ← 2 N

J = J + 1

26

oui — J ≤ K−2

non

S(I) contient les échantillons filtrés

FIN

19

0 131 521

Fig.7.

$$\gamma$$
$$E(N), \ H(NF)$$

NF2= 2 x NF
NF4= 4 x NF + 1

**32**

NF2 points symétriques des premiers points par rapport à E(1) sont ajoutés avant E(1)
NF2 points symétriques des derniers points par rapport à E(N) sont ajoutés après E(N)

**34**

$$S(2I-1) = E(I)$$
$$S(21) = O \ (1=1,... \ N+NF2)$$

**36**

$$E(I) \ \leftarrow \ S(I) \ I=I, \ 2(N+NF2)$$

I = NF4

J = 1 - NF4 + 1

S(2J) = O

K = 1

$$S(2J) = S(2J) + H(K) \ (E(2J - 2K + NF) + E \ (2J + 2K - 1))$$

K = K+1

non ⟵ K > NF

**38**

oui

$$S(2J) = 2 \ x \ S(2J) \ +$$

$$S(2J-1) = E(2J+NF2-1)$$

I = I + 1

non ⟵ I > N + 2 NF2

oui

S(I) avec I=1, 2N contient les échantillons filtrés

Retour

21

# Fig.8.

$$\delta$$
$$E(N) \quad H(NF)$$

$$NF1 = NF-1$$
$$NF2 = 2\ NF1$$

**32**

NF1 points symétriques des premiers points par rapport à E(1) sont ajoutés avant E(1)

NF1 points symétriques des derniers points par rapport à E(N) sont ajoutés après E(N)

$$S(2I-1) = E(I)$$
$$S(2I) = 0 \quad I = 1,\ldots\ N+NF1$$

$$E(I) \leftarrow S(I)\ I = 1,\ 2(N+FN2)$$

$$K = NF2 + 1$$
$$J = K - NF2$$

$$S(J) = 0$$

$$I = 1$$

$$S(J) = S(J) + H(I) \times [\ E(K-I+1) + E(K-NF+I)]$$
$$I = I + 1$$

**non** ◇ J>NF1

**oui**

$$S(J) \leftarrow \quad S(J) + H(NF2 + 1) \times E(K-NF2)$$
$$S(J) \leftarrow \quad 2 \times S(J) \quad\quad\quad K \leftarrow K + 1$$

**non** ◇ K> N+2 NF2

**oui**

**38**

S(I) avec I = 1,2N contient les échantillons filtrés

( Retour )